Europäisches Patentamt

**European Patent Office**

Office européen des brevets

(11) Numéro de publication: **0 273 830 B1**

## FASCICULE DE BREVET EUROPEEN

(45) Date de publication de fascicule du brevet:
**17.07.91**

(51) Int. Cl.⁵: **B29C 45/00**

(21) Numéro de dépôt: **87403000.0**

(22) Date de dépôt: **30.11.87**

Jointe à la demande no. 88900020.4/0290582
(numéro de dépôt/numéro de publication de la
demande européenne) par décision du 30.01.90.

(54) **Procédé et installation de fabrication d'un produit par injection de matière dans un moule avec traitement de la matière injectée.**

(30) Priorité: **02.12.86 FR 8616835**

(43) Date de publication de la demande:
**06.07.88 Bulletin 88/27**

(45) Mention de la délivrance du brevet:
**17.07.91 Bulletin 91/29**

(84) Etats contractants désignés:
**DE ES GB IT**

(56) Documents cités:
**EP-A- 0 188 120**      **DE-A- 2 414 819**
**DE-C- 717 122**        **FR-A- 1 432 150**
**FR-A- 2 451 259**      **US-A- 4 150 079**
**US-A- 4 219 322**      **US-A- 4 288 398**

(73) Titulaire: **SOLOMAT PARTNERS L.P.**
**Glenbrook Industrial Park, Glenbrook Road 652**
**Stamford, CT 06906(US)**

(72) Inventeur: **IBAR Jean Pierre**
**Avenue de la Division Leclerc**
**F-91160 Ballainvilliers(FR)**

(74) Mandataire: **W.P. THOMPSON & CO.**
**Eastcheap House Central Approach**
**Letchworth, Hertfordshire SG6 3DS(GB)**

Rank Xerox (UK) Business Services

## Description

La présente invention concerne un procédé et une installation de fabrication d'un produit par injection de matière dans un moule.

Dans un procédé et une installation d'injection, à l'aide de moules, les moules peuvent avoir une double fonction, d'abord la fonction de donner la forme aux produits et ensuite celle de constituer un échangeur de chaleur pour refroidir la matière contenue dans le moule.

Selon l'état de la technique, on estime actuellement que la qualité d'un produit est, en général, d'autant meilleure que le refroidissement se fait de manière régulière et égale dans toute l'épaisseur du produit de façon à supprimer les contraintes internes au produit.

Or, un tel résultat est difficile à obtenir car le refroidissement se fait par conduction et par rayonnement.

L'importance de l'un ou l'autre des deux modes d'échange de chaleur dépend de la nature du produit, de la forme du moule, etc....

La conséquence en est un refroidissement en général d'autant plus régulier qu'il est lent, voire extrêmement lent.

Or, un tel impératif est contradictoire avec les impératifs de fabrication économique de produits.

Il est également à remarquer que le problème tel qu'il a été posé dans l'art antérieur ne concerne en définitive qu'une amélioration de la qualité d'un produit injecté et non la modification des caractéristiques de la matière une fois injectée.

Sur un plan général, le brevet FR-A-2 451 259 IBAR décrit le principe général du rhéomoulage mais n'évoque pas les questions particulières de l'injection.

La présente invention a pour but de développer un procédé et une installation de fabrication d'un produit par injection de matière dans un moule permettant de modifier les propriétés de la matière et, par suite, du produit, après l'injection et avant le démoulage de façon à obtenir un produit ayant des caractéristiques différentes et meilleures que celles que présenterait ce produit s'il était moulé selon les méthodes classiques.

A cet effet, l'invention concerne un procédé du type ci-dessus, caractérisé en ce que :

a) on injecte la matière dans le moule au niveau d'un poste d'injection,

b) on déplace le moule contenant la matière injectée du poste d'injection vers un poste de traitement,

c) dans le poste de traitement, on soumet la matière à injecter à une pression, à des vibrations et une température variables selon un programme déterminé pour modifier les caractéristiques physiques et chimiques de la matière à injecter et

d) on extrait le produit ainsi injecté et dont la matière a été modifiée, du moule.

L'invention permet ainsi d'induire dans la matière du produit un historique de refroidissement pour modifier et/ou améliorer les caractéristiques du produit constituant la pièce.

Il est à remarquer que la température du moule avant la mise en oeuvre du procédé, c'est-à-dire avant l'injection n'est pas nécessairement la température d'injection ; cette température peut être la température de départ du procédé, indépendante ou non de la température du produit.

En d'autres termes, le moule est traité séparément de l'injection.

Enfin, suivant une variante, on fait agir un moyen de vibration mécanique sur le moule et non sur la matière par l'intermédiaire de la sonde. Ce moyen est surtout applicable pour les petites pièces moulées alors que la sonde convient particulièrement pour les grosses pièces.

Dans tous les cas, le procédé et l'installation selon l'invention permettent de fabriquer un produit destiné à de hautes performances, ou à diminuer la quantité de matière requise pour obtenir des propriétés similaires à celles obtenues par les traitements d'injection conventionnels.

L'invention concerne également une installation pour la mise en oeuvre du procédé ci-dessus, caractérisée en ce qu'elle comprend :

- un moyen pour déplacer séquentiellement un ensemble de moules dans un poste d'injection puis dans un poste de traitement,

- un dispositif d'injection au niveau du poste d'injection pour injecter de la matière dans les moules,

- un moyen de traitement dans le poste de traitement pour soumettre la matière à injecter dans le moule à une pression, des vibrations et une température variable selon un programme déterminé.

Bien que de manière préférentielle, l'installation soit constituée par un ensemble de moules circulant de manière continue ou pas à pas pour passer devant le dispositif d'injection et coopérer avec les moyens permettant d'appliquer une pression et une fréquence et une température variables suivant un programme déterminé, il est également envisageable, pour des moules de grandes dimensions, n'existant en une seule pièce, de prévoir une installation à poste fixe dans laquelle le dispositif d'injection se met en place devant le moule pour injecter la matière, puis, une fois l'injection terminée, le moule est relié à la tête de traitement sans que l'ensemble ne circule suivant une boucle.

Pour la fabrication de pièces en série, il est particulièrement intéressant que l'ensemble de moules en circulation soit constitué par un plateau ou carrousel portant les différents moules de manière à les faire défiler devant les dispositifs d'injection. Dans ce cas, les têtes de traitement peuvent être associées chacune à un moule particulier ou encore n'être qu'en nombre correspondant à la trajectoire correspondant à la durée du traitement, ces têtes revenant alors directement alors que les moules passent dans les différents postes d'ouverture de moules d'extraction de la pièce de nettoyage, de réchauffage ou de refroidissement avant de revenir devant le dispositif d'injection.

La présente invention sera décrite de façon plus détaillée à l'aide des dessins annexés dans lesquels :
- La figure 1 est un schéma de principe du procédé d'injection de l'invention,
- La figure 2 est un schéma d'une installation pour la mise en oeuvre du procédé.

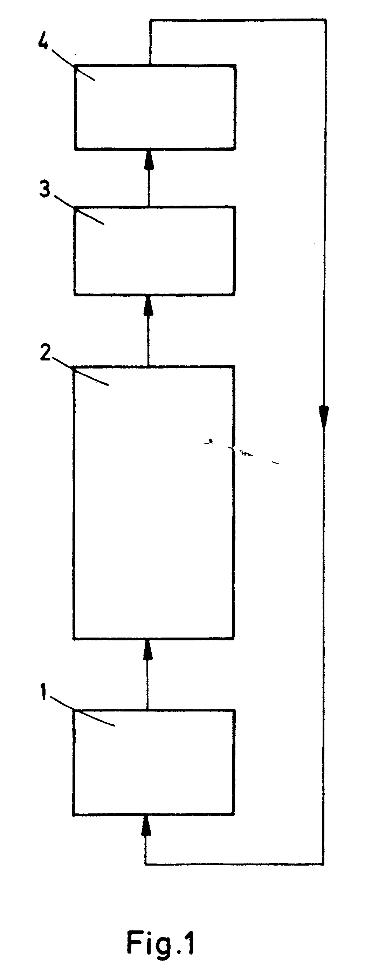

Selon la figure 1, le procédé de fabrication d'un produit par injection d'une matière dans un moule selon l'invention consiste à injecter (1) de la matière dans un moule, à enlever le moule de la buse d'injection puis à soumettre (2) cette matière contenue dans le moule à une pression, une fréquence et une température variables suivant un programme prédéterminé pour modifier les caractéristiques physicochimiques de la matière injectée puis à extraire (3) la pièce du moule et à traiter (4) le moule (réchauffage, refroidissement) avant de réinjecter (1) de la matière dans ce moule.

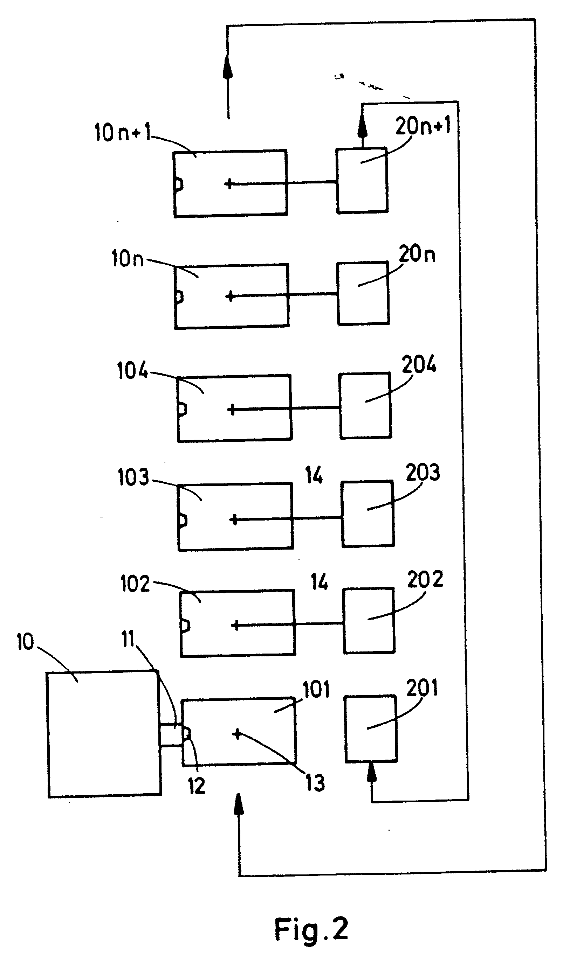

La figure 2 montre schématiquement une installation pour la mise en oeuvre du procédé explicité à l'aide de la figure 1.

Selon la figure 2, l'installation de fabrication de produits par injection de matière dans un moule se compose d'un poste d'injection (10) avec une buse d'injection (11) et d'un ensemble de moules (101, 102 ...10n ... 10n + 1) et de têtes de traitement (201, 202, 203....20n et 20 n + 1) destinées à coopérer avec les moules.

Les ensembles de moules et de têtes de traitement défilent de manière associée dans l'installation.

Il s'agit par exemple d'un chemin continu à la manière d'un convoyeur ou d'une table de carrousel portant les moules.

Les moules défilent devant l'injecteur 10 pour recevoir la quantité de matière injectée dans le moule à travers l'orifice d'injection (12) représenté schématiquement dans les différents moules.

Chaque moule (100....10n, 10n + 1...) comporte également un orifice 13 pour la mise en place de la tête de traitement (201...20n, 20 + 1). Cet orifice 13 peut être l'orifice d'injection ou l'un des orifices d'injection ou encore un orifice différent.

Chaque tête de traitement (201...20n + 1) permet d'appliquer à la matière contenue dans le moule une pression et une température et une fréquence variables évoluant suivant un programme prédéterminé.

Chaque tête de traitement est associée à un moule au moins pendant la durée du traitement, ce qui correspond à la partie du trajet du moule sur sa trajectoire en circuit.

Il est à remarquer que la tête de traitement n'est reliée au moule correspondant (comme cela est représenté schématiquement par le trait 14), une fois l'injection terminée et non en cours d'injection.

Ainsi le moule 101 qui est en cours d'injection devant le dispositif d'injection 10 n'est pas encore relié à la tête de traitement 201 qui lui est associée.

Par contre, le moule 102 qui n'est pas en relation avec le dispositif d'injection 10 est relié (lien 14) à la tête de traitement 202.

Bien que ci-dessus, on ait envisagé de manière schématique de faire varier la pression, la température et la fréquence de la matière contenue dans le moule postérieurement à l'injection, à l'aide de la tête de traitement 20n, il est également envisageable de ne faire varier par cette tête que la pression et la fréquence, la variation de température se faisant par un moyen intégré au moule par exemple un circuit de fluide de refroidissement ou de réchauffage intégrés au moule.

## Revendications

1. Procédé de fabrication d'un produit par injection de matière dans un moule, procédé caractérisé en ce que :
   a) on injecte (1) la matière dans le moule au niveau d'un poste d'injection,
   b) on déplace le moule contenant la matière injectée du poste d'injection vers un poste de traitement,
   c) dans le poste de traitement, on soumet (2) la matière à injecter à une pression, à des vibrations et une température variables selon un programme déterminé pour modifier les caractéristiques physiques et chimiques de la matière à injecter et
   d) on extrait (3) le produit ainsi injecté et dont la matière a été modifiée, du moule.

2. Appareil pour la fabrication d'un produit mettant en oeuvre le procédé selon la revendication 1, caractérisé en ce qu'il comprend :
   - un moyen pour déplacer séquentiellement un ensemble de moules (101, 102...) dans un poste d'injection (10) puis dans un poste de traitement (201,... 20n + 1),
   - un dispositif d'injection (11) au niveau du poste d'injection (10) pour injecter de la matière dans les moules,
- un moyen de traitement (201,...20n + 1) dans le poste de traitement pour soumettre la matière à injecter dans le moule à une pression, des vibrations et une température variables selon un programme déterminé.

**Claims**

1. Method of manufacturing a product by injecting material into a mould, characterised in that:
   a) the material is injected (1) into the mould at the level of an injection point,
   b) the mould containing the injected material is moved from the injection point to a treatment point,
   c) at the treatment point, the material to be injected is subjected (2) to a pressure, vibration and a temperature which are variable in accordance with a predetermined programme in order to modify the physical and chemical characteristics of the material to be injected, and
   d) the product which has been injected in this way and whose material has been modified is extracted (3) from the mould.

2. Apparatus for manufacturing a product carrying out the method as in claim 1, characterised in that it comprises:
   - a means for sequentially displacing an assembly of moulds (101, 102 ...) to an injection point (10) and then to a treatment point (201, ... 20n + 1),
   - an injection device (11) at the level of the injection point (10) for injecting material into the moulds,
   - a treatment means (201,...20n + 1) at the treatment point for subjecting the material to be injected into the mould to a pressure, vibration and a temperature which are variable in accordance with a predetermined programme.

**Patentansprüche**

1. Verfahren zum Herstellen eines Produktes durch Einspritzen von Material in eine Form, dadurch gekennzeichnet, daß
   a) man das Material in die Form in Höhe einer Einspritzstation einspritzt (1),
   b) man die das eingespritzte Material enthaltende Form von der Einspritzstation in eine Behandlungsstation bewegt,
   c) man in der Behandlungsstation das einzuspritzende Material einem Druck, Vibrationen und einer Temperatur unterzieht (2), die gemäß einem Programm einstellbar sind, welches dazu bestimmt ist, die physikalischen und chemischen Eigenschaften des einzuspritzenden Materials zu modifizieren und
   d) man das so eingespritzte Produkt, dessen Material modifiziert worden ist, aus der Form entformt.

2. Vorrichtung zur Herstellung eines Produktes unter Verwendung des Verfahrens gemäß Anspruch 1, gekennzeichnet durch folgende Merkmale:
   - ein Mittel zum sequentiellen Bewegen eines Satzes von Formen (101, 102...) in eine Einspritzstation (10), danach in eine Behandlungsstation (201,...20n + 1),
   - eine Einspritzeinrichtung (11) in Höhe der Einspritzstation (10), um Material in die Formen einzuspritzen,
   - ein Behandlungsmittel (201,...20n + 1) in der Behandlungsstation, um das einzuspritzende Material in der Form einem Druck, Vibrationen und einer Temperatur zu unterziehen, die gemäß einem bestimmten Programm einstellbar sind.

Fig.1

Fig.2